# EUROPÄISCHE PATENTSCHRIFT

(11) **EP 0 540 768 B1**
(45) Veröffentlichungstag und Bekanntmachung des Hinweises auf die Patenterteilung: **19.06.1996**
(21) Anmeldenummer: 91118753.2
(22) Anmeldetag: 04.11.1991
(51) Int. Cl.: B65G 21/06

(54) **Bandfördervorrichtung**
Belt conveyor device
Dispositif de transporteur à courroie

(43) Veröffentlichungstag der Anmeldung: 12.05.1993
(73) Patentinhaber: Geppert, Helmut, D-52382 Niederzier (DE)
(72) Erfinder: Geppert, Helmut, D-52382 Niederzier (DE)
(74) Vertreter: Aubele, Karl B.

(56) Entgegenhaltungen:
- EP-A- 0 329 832
- DE-A- 3 728 138
- FR-A- 2 590 877
- FR-A- 2 636 052

## Beschreibung

Die Erfindung betrifft Bandfördervorrichtungen mit einem Rahmen mit im Abstand gegenüberliegenden, zueinander parallel verlaufenden Längsholmen, mit einem zwischen den Längsholmen angeordneten Zwischenstück mit mindestens einer Wand mit einer Gleitebene für die Anlage eines Fördergurtes, wobei an den Längsholmen Lagerschilde für Umlenk- und/oder Antriebswalzen befestigbar sind zur Führung und/oder zum Antrieb des Fördergurtes, wobei das Zwischenstück zwei sich im Abstand gegenüberliegende Oberflächen mit in Längsrichtung durchgehenden Hohlräumen antreibt.
Einrichtungen dieser Art sind bspw. bekannt geworden durch die europäische Veröffentlichung Nr. 0 329 832, dort insbesondere die Figuren 11 und 12 mit zugehöriger Beschreibung. Bandfördervorrichtungen mit solchen Rahmen haben sich ganz ausgezeichnet bewährt. Solche Bandfördervorrichtungen können jedoch mit Ausnahme des Transportes sonst keinerlei Einwirkung auf das zu transportierende Gut ausüben. Häufig ist es jedoch wünschenswert, auf das zu transportierende Gut einzuwirken, um bspw. eine bessere Bergauf- oder Bergabförderung zu erreichen.

Der Erfindung liegt somit die Aufgabe zugrunde, eine Bandfördervorrichtung der eingangs beschriebenen Art vorzuschlagen, mit der auf das zu transportierende Gut auf einfache Weise eingewirkt werden kann.

Ausgehend von einer Bandfördervorrichtung der eingangs beschriebenen Art ist diese Aufgabe durch die Kennzeichnenden Merkmale des Patentanspruchs 1 gelöst. Hierbei ist selbstverständlich nur eine Einwirkung auf solches Stückgut möglich, das auf Magnete anspricht. Die Magnete bewirken eine festere Anlage am Fördergurt, so daß z.B. Konservendosen ohne besondere Einrichtungen am Fördergurt, wie Stollen oder ähnliches noch relativ steil aufwärts befördert werden können, wobei gleichzeitig hierdurch verhindert wird, daß aufgestellte Konservendosen umfallen. Nach der Erfindung entsteht ein kastenartiger Aufbau mit in Längsrichtung durchgehenden Hohlräumen, in welche die Magnete eingesetzt sind. Dies erlaubt eine besonders einfache Anordnung der Magnete und macht jede Form der besonderen Befestigung überflüssig.

Nach einer einfachen Ausführungsform der Erfindung wird vorgeschlagen, die Magnete als Dauermagnete auszubilden. Irgendwelche Steuerungen oder sonstige Manipulationen sind dann nicht mehr erforderlich. Die Dauermagnete bedürfen darüberhinaus keinerlei besonderer Wartung.

Ergänzend wird vorgeschlagen, daß die Magnete als Elektromagnete ausgebildet sind. Die Elektromagnete können in ihrer magnetischen Kraft auf den gewünschten Effekt in einfacher Weise abgestimmt werden. Ergänzend hierzu ist nach der Erfindung noch vorgeschlagen, daß mindestens ein Teil der Elektromagnete mit einer Regeleinrichtung zur Regelung der Feldstärke verbunden ist. Hierdurch kann die Bandfördervorrichtung, ohne selbst geändert werden zu müssen, unterschiedlichen Transportaufgaben angepaßt werden.

Weiterhin ist nach der Erfindung noch vorgeschlagen, daß die Magnete über die gesamte, von der Wand überdeckte Fläche verteilt angeordnet sind. Hierdurch wird eine gleichmäßige Verteilung der magnetischen Kräfte erreicht. Ergänzend hierzu wird vorgeschlagen, daß die Magnete so dicht wie möglich gepackt sind. Hierdurch erfolgt naturgemäß eine günstige Ausnutzung der Feldstärke der Magnete.

Nach einer weiteren Ausgestaltung der Erfindung ist vorgeschlagen, daß das Zwischenstück mindestens mit einem Zuflußanschluß verbunden ist zur Hindurchführung eines Fluids gewünschter Temperatur durch die Hohlräume des Zwischenstückes. Hierdurch wird es möglich, den Rahmen der Bandfördervorrichtung in gewünschter Weise zu temperieren, so daß zu transportierendes Gut erwärmt, gekühlt oder in seiner Temperatur konstant gehalten werden kann. Diese Beeinflussung des Fördergutes und die Beeinflussung durch die Magnete können bei der erfindungsgemäßen Bandfördervorrichtung gemeinsam erfolgen, wobei darüberhinaus dann, wenn eine Temperaturbeeinflussung des zu fördernden Gutes ohne Bedeutung ist und Elektromagnete verwendet werden, diese, soweit im Bereich der Elektromagnete Wärme entsteht, durch das hindurchspülbare Fluid auch gekühlt werden können.

Eine ergänzende Ausgestaltung der Erfindung schlägt vor, daß das Fluid eine Flüssigkeit ist. Dies ergibt sicherlich die intensivste Möglichkeit einer Temperaturbeeinflussung.

Eine Alternative schlägt jedoch vor, daß das Fluid ein Gas ist. Die Verwendung von Flüssigkeiten ist nicht immer möglich. Auch mit Gas ist jedoch eine Kühlung oder Heizung durchführbar. Außerdem wird bei der Verwendung von Gas der apparative Aufwand zum Führen und Pumpen des Gases geringer.

Schließlich ist nach der Erfindung noch vorgeschlagen, daß mindestens das Zwischenstück aus einem nichtmagnetischen Material besteht. Hierdurch wird eine Beeinflussung des Zwischenstücks durch die Magnete vermieden.

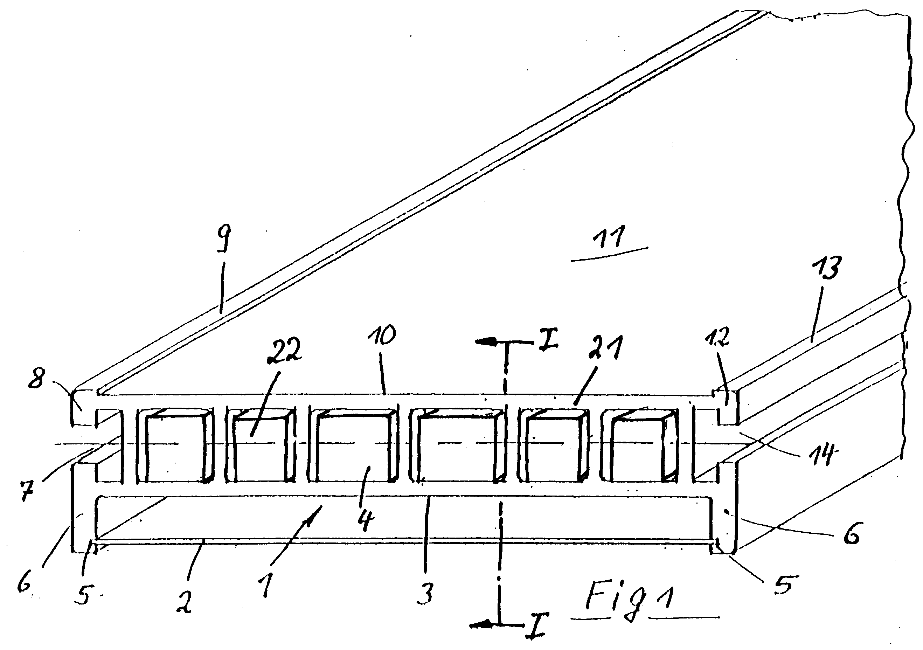

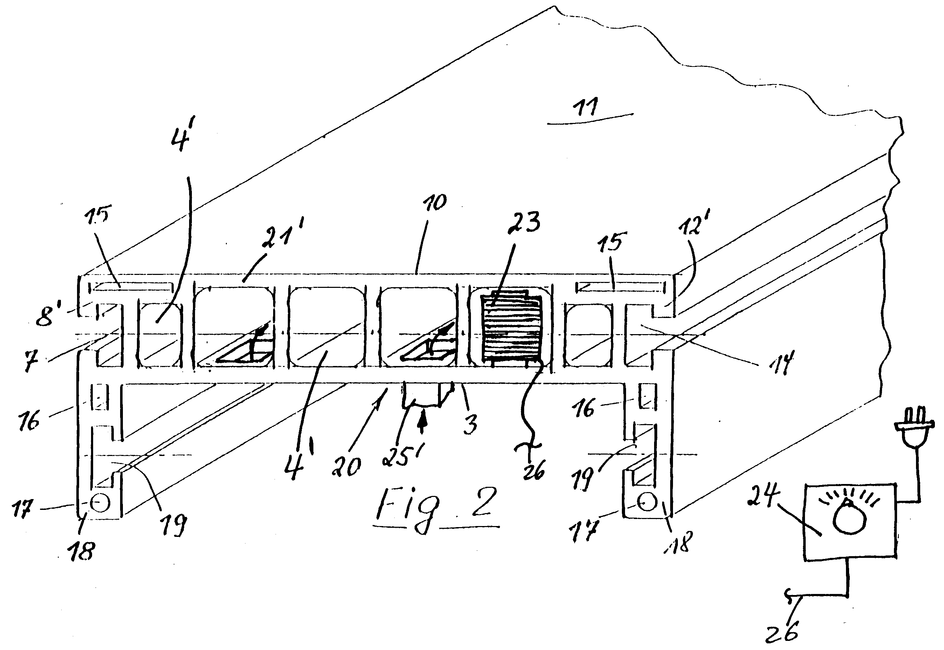

Eine Ausführungs form der Erfindung soll nun anhand der beigefügten Zeichnungen näher erläutert werden. Es zeigen:
- Figur 1: Endstück eines einstückig ausgebildeten Rahmens einer Bandfördervorrichtung in Perspektive
- Figur 2: Rahmen ähnlich Figur 1, jedoch mit geändertem Profilaufbau
- Figur 3: Schnitt entlang Linie I-I nach Figur 1
- Figur 4: Schnitt wie Figur 3, jedoch mit einem Zuflußanschluß für ein Fluid
Bei einer Ausführungsform nach Figur 1 liegen Längsholme 8 und 12 vor, mit längsverlaufenden T-Nuten 14 und 7. Die Längsholme 8 und 12 können einen in Längsrichtung verlaufenden Flansch 6 aufweisen. der Flansch 6 nach der Ausführungsform in Figur 1 weist weiter eine schlitzartige und in Längsrichtung verlaufende Nut 5 auf, in die ein unteres Gleitblech 2 eingeschoben ist. Anstelle eines oberen Gleitbleches sind in der Ausführungsform nach Figur 1 die beiden Längsholme 8 und 12 einstückig mit einem Zwischenstück 1 ausgebildet, das die beiden Längsholme 8 und 12 auf den erforderlichen Abstand hält und diese miteinander starr verbindet. Dieses Zwischenstück 1 weist vorzugsweise einen gerüstartigen oder auch kastenartigen Aufbau auf mit einer Anzahl von in Längsrichtungen durchlaufenden Hohlräumen 4. Hierdurch kann dem Zwischenstück 1 einerseits eine ausreichende Dicke und Steifigkeit gegeben werden und es kann dennoch leicht gehalten werden und es ist andererseits möglich, diese Hohlräume 4 für den Einsatz von Dauermagneten 22 oder für den Einsatz von Elektromagneten 23 ( Figur 2) zu verwenden. Die Durchbrüche können hierzu vorzugsweise einen quadratischen oder rechteckigen Querschnitt aufweisen. Jedoch können auch andere Querschnitte, wie z.B. ein kreisförmiger Querschnitt, verwendet werden. Die Anzahl der nebeneinander angeordneten Durchbrüche 4 richtet sich hierbei nach der Breite des gesamten Rahmens.

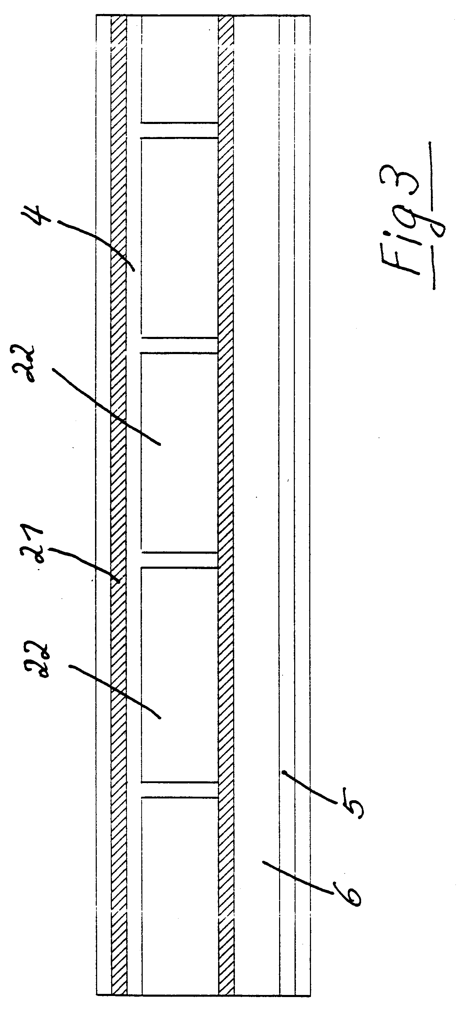

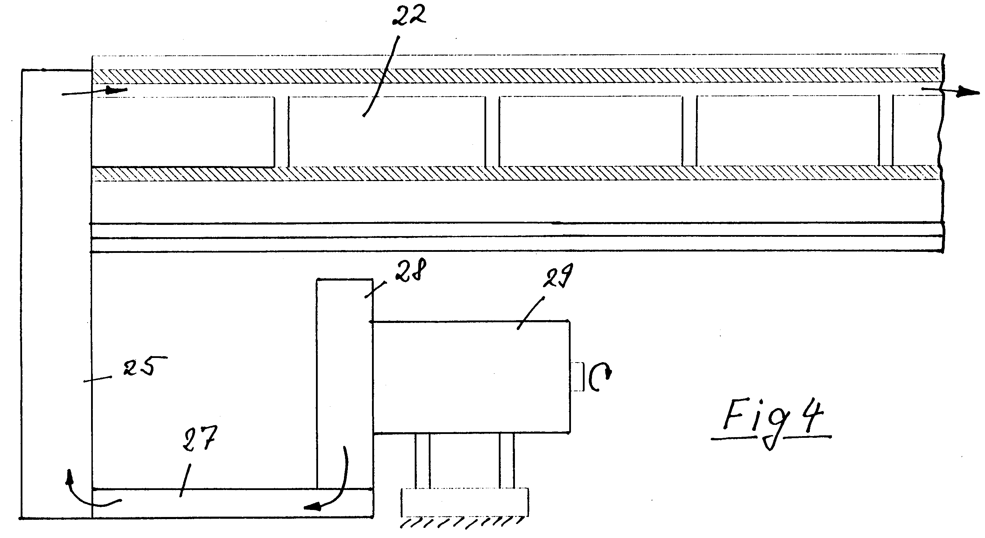

Wie die Figuren 3 und 4 zeigen, können z.B. die Dauermagnete 22 als Einzelstücke in Längsrichtung in dichter Folge hintereinander in die Hohlräume 4 eingeschoben werden.

Das Zwischenstück 1 weist zwei sich im Abstand gegenüberliegende und vorzugsweise parallel verlaufende Oberflächen 10 und 3 auf, von denen im Ausführungsbeispiel die Oberfläche 10 als Gleitebene 11 für ein Förderband dient. Diese Gleitebene ersetzt das sonst übliche Gleitblech. Es ist jedoch auch möglich, bei Bedarf auf diese Gleitebene 11 noch ein Gleitblech aufzulegen oder in anderer Weise eine Gleitschicht aufzubringen. Seitlich kann die Gleitebene 11 von zwei Begrenzungsstegen 9 und 13 eingefaßt sein. Diese sind in ihrer Dicke oder Höhe niedriger als die Dicke des verwendeten Förderbandes, so daß die Einzelstücke auf dem Förderband, die am Rande etwas überstehen, nicht durch Auflaufen auf diese Begrenzungsstege festgehalten werden. Es ist aber auch möglich, diese Begrenzungsstege 9 und 13 erheblich dicker zu gestalten und als seitliche Begrenzung für die zu fördernden Stücke zu verwenden.

Das in Figur 1 dargestellte Teil kann als Halbzeug hergestellt werden und muß daher lediglich auf Länge getrennt werden. Es können dann in üblicher Weise Lagerschilde in entsprechender Anpassung der Befestigungsmittel verwendet werden zur Vervollständigung des Rahmens, wie dies aus dem eingangs bereits zitierten Stand der Technik bekannt ist. Dies gilt auch für das Ausführungsbeispiel nach Figur 2. Die Längsholme 8' und 12' weisen auch hier oberhalb der T-Nut 7 bzw. 14 je eine rechteckige Ausnehmung 15 bspw. zur Einführung eines Spaltbleches auf. Weiter weisen die Längsholme 8' und 12' in Längsrichtung verlaufende Flansche 18 auf. Diese Flansche 18 können auch mit der in Längsrichtung verlaufenden schlitzartigen Nut 5 nach Figur 1 kombiniert werden. Die Flansche 18 können darüberhinaus in Längsrichtung verlaufende T-Nuten 19 sowie Längsöffnungen 16 und 17 parallel zur T-Nut 19 verlaufend aufweisen. Diese Längsöffnungen 16 und 17 können bspw. zur Führung eines Lagerschildes verwendet werden. Damit können sowohl bei den Ausführungsformen nach Figur 1 als auch bei einer Ausführungsform nach Figur 2 alle notwendigen Aufbauten angebracht werden. Auch bei der Ausführungsform nach Figur 2 werden die beiden Längsholme 8' miteinander verbunden durch ein durchgehend ausgebildetes Zwischenstück 20, das einstückig mit den Längsholmen 8' und 12' ausgebildet ist. Es weist ebenfalls vorzugsweise eine kastenartige Struktur auf, wie dies bereits zur Figur 1 beschrieben wurde. Die Gleitebene 11 ist im Unterschied zur Ausführungsform nach Figur 1 bei der Ausführungsform nach Figur 2 vollständig randlos gehalten.

Es sei hier gesondert darauf hingewiesen, daß das Zwischenstück 1 bzw. 20, das die beiden parallel verlaufenden Längsholme 8 bzw. 8' miteinander verbindet, nicht unbedingt einstückig ausgebildet sein muß. Dieses Zwischenstück kann durchaus in Längsrichtung einfach oder mehrfach geteilt und an den Teilnähten zusammengesetzt oder miteinander verbunden sein.

In die Hohlräume 4' der Ausführungsform nach Figur 2 sind anstelle der Dauermagnete 22 Elektromagnete 23 eingesetzt. Diese Elektromagnete 23 sind damit unterhalb der Wand 21' angeordnet und es können die Hohlräume 4' mit solchen Elektromagneten dicht gepackt sein. Anstelle von Elektromagneten mit im Querschnitt rundem Eisenkern, können auch solche mit im Querschnitt rechteckigem Eisenkern verwendet werden. Es liegt dann eine ähnliche Anordnung vor, wie nach Figur 1, bei der ebenfalls die Dauermagnete 22 unterhalb der Wand 21 angeordnet sind. Denkbar ist natürlich auch, daß alle Magneten an der Unterseite der Wand 21 bzw. 21' befestigt sind.

Insbesondere bei der Verwendung von Elektromagneten 23 können diese über ein Verbindungskabel 26 mit einer Regeleinrichtung 24 verbunden sein. Mit dieser Regeleinrichtung 24 kann die Feldstärke der Elektromagnete 23 nach Bedarf eingestellt werden.

Die in den Figuren 1 und 2 in Teilen dargestellten Rahmen von Bandfördervorrichtungen können sowohl in der Ausführung mit der Magnetausrüstung als auch ohne eine solche Magnetausrüstung verwendet werden. Die Hohlräume 4 bzw. 4' sind dazu geeignet, ein hindurchzupumpendes Fluid zu führen. Hierbei ist es unerheblich, ob in den Hohlräumen 4 bzw. 4' Magnete angeordnet sind oder nicht. Falls in den Hohlräumen 4' Elektromagnete angeordnet sind, so können diese von dem hindurchgepumpten Fluid bei Bedarf gekühlt werden. Das erforderliche Fluid kann mittels eines Zuflußanschlusses 25, wie in Figur 4 dargestellt, zugeführt werden. Der Zuflußanschluß 25 kann bspw. für die Zuführung eines gasförmigen Fluids als flacher hohler Kasten vor die Stirnseite des Zwischenstücks 1 nach Figur 1 gestellt und dort gedichtet werden, wie dies der Darstellung nach Figur 4 entnommen werden kann. Dieser Zuflußanschluß 25 muß hierbei in der Breite so breit sein, daß die gewünschte Anzahl von Hohlräumen 4 stirnseitig überdeckt wird. Er muß jedoch gleichzeitig genügend schmal sein, um an den Enden der Längsholme 8 die T-Nuten 7 bzw. 14 nicht zu überdecken, damit dort die Lagerschilde (nicht gezeichnet) für die Umlenkwalzen oder Antriebswalzen eingesteckt und befestigt werden können.

Der Zuflußanschluß 25 wird über eine Zuführung 27 von einem Radialgebläse 28 mit einem gasförmigen Fluid versorgt. Das Radialgebläse 28 kann hierbei von einem Elektromotor 29 angetrieben sein. Das verwendete Fluid kann bei Bedarf erwärmt oder gekühlt sein, so daß seine Temperatur auf das durchströmte Zwischenstück und weiter auf das zu transportierende Gut übertragen wird. Es wäre dann z.B. unabhängig vom Vorhandensein der Magnete möglich, ein transportiertes Gut zu erwärmen, in seiner Temperatur konstant zu halten oder zu kühlen während des Transportes.

Die Zuführung des Fluids muß jedoch nicht notwendigerweise von der Stirnseite des Zwischenstücks her erfolgen. Es ist ebensogut möglich, einzelne Hohlräume des Zwischenstücks mit einem Fluid zu versorgen, während andere Hohlräume unbeaufschlagt bleiben. Außer von der Stirnseite kann das Fluid auch z.B. über Zuflußanschlüsse 25', wie in Figur 2 dargestellt, von der Unterseite zugeführt werden.

Die Verwendung von Magneten in den Hohlräumen erlaubt es z.B. Konservendosen aus einem auf Magnetismus ansprechenden Metall fest gegen den Fördergurt zu ziehen, so daß es nunmehr möglich wird, den einfachen glatten Fördergurt mit dem ganzen Rahmen der Bandfördervorrichtung schräg zu stellen, so daß relativ steil schräg nach oben oder schräg nach unten transportiert werden kann, ohne daß solche Konservendosen umfallen oder abrutschen und ohne daß irgendwelche weiteren Maßnahmen wie Stollen oder ähnliche Vorrichtungen am Fördergurt notwendig wären. Soweit Elektromagnete verwendet werden, können diese auch regelbar sein, so daß die magnetische Feldstärke den Förderaufgaben angepaßt werden kann. Bei hoher Feldstärke kann ggfls. die Fluidzuführung auch benutzt werden, um die Spulen der Magnete zu kühlen. Es ist darüberhinaus möglich, bereits bestehende Bandfördervorrichtungen nachzurüsten, so daß durch die Nachrüstung die erfindungsgemäßen Vorteile erreicht werden.

### Liste der verwendeten Bezugszeichen

- 1: Zwischenstück
- 2: Gleitblech
- 3: Oberfläche
- 4: Hohlräume
- 4': Hohlräume
- 5: Nut
- 6: Flansch
- 7: T-Nut
- 8: Längsholm
- 8': Längsholm
- 9: Begrenzungssteg
- 10: Oberfläche
- 11: Gleitebene
- 12: Längsholm
- 12': Längsholm
- 13: Begrenzungssteg
- 14: T-Nut
- 15: Ausnehmung
- 16: Längsöffnung
- 17: Längsöffnung
- 18: Flansch
- 19: T-Nut
- 20: Zwischenstück
- 21: Wand
- 21': Wand
- 22: Magnete
- 23: Magnete
- 24: Regeleinrichtung
- 25: Zuflußanschluß
- 25': Zuflußanschluß
- 26: Verbindungskabel
- 27: Zuführung
- 28: Radialgebläse
- 29: E-Motor

## Patentansprüche

1. Bandfördervorrichtung mit einem Rahmen mit im Abstand gegenüberliegenden, zueinander parallel verlaufenden Längsholmen (8,8'), mit einem zwischen den Längsholmen angeordneten Zwischenstück (1,20) mit mindestens einer Wand (21, 21') mit einer Gleitebene (11) für die Anlage eines Fördergurtes, wobei an den Längsholmen Lagerschilde für Umlenk- und/oder Antriebswalzen befestigbar sind zur Führung und/oder zum Antrieb des Fördergurtes, wobei das Zwischenstück (1, 20) einen kastenförmigen Aufbau hat und zwei sich im Abstand gegenüberliegende Oberflächen (10, 3) mit in Längsrichtung durchgehenden durch stege voneinander getrennten Hohlräumen (4, 4') aufweist, dadurch gekennzeichnet, daß in den Hohlräumen unterhalb der Wand (21,21') zur Einwirkung auf mit dem Fördergurt transportiertes Stückgut Magnete (22,23) eingesetzt sind.

2. Bandfördervorrichtung nach Anspruch 1, dadurch gekennzeichnet, daß die Magnete (22) als Dauermagnete ausgebildet sind.

3. Bandfördervorrichtung nach Anspruch 1, dadurch gekennzeichnet, daß Magnete (23) als Elektromagnete ausgebildet sind.

4. Bandfördervorrichtung nach Anspruch 3, dadurch gekennzeichnet, daß mindestens ein Teil der Elektromagnete (23) mit einer Regeleinrichtung (24) zur Regelung der Feldstärke verbunden ist.

5. Bandfördervorrichtung nach einem der Ansprüche 1 bis 4, dadurch gekennzeichnet, daß die Magnete (22,23) über die gesamte, von der Wand (21,21') überdeckte Fläche verteilt angeordnet sind.

6. Bandfördervorrichtung nach Anspruch 5, dadurch gekennzeichnet,daß die Magnete (22,23) so dicht wie möglich gepackt sind.

7. Bandfördervorrichtung nach einem der Ansprüche 1 bis 6, dadurch gekennzeichnet, daß das Zwischenstück (1,20) mindestens mit einem Zuflußanschluß (25,25') verbunden ist, zur Hindurchführung eines Fluids gewünschter Temperatur durch die Hohlräume (4,4') des Zwischenstuckes (1,20).

8. Bandfördervorrichtung nach Anspruch 7, dadurch gekennzeichnet, daß das Fluid eine Flüssigkeit ist.

9. Bandfördervorrichtung nach Anspruch 7, dadurch gekennzeichnet, daß das Fluid ein Gas ist.

10. Bandfördervorrichtung nach einem der Ansprüche 1 bis 9, dadurch gekennzeichnet, daß mindestens das Zwischenstück (1,20) aus einem nichtmagnetischen Material besteht.

## Claims

1. Belt conveyor with a frame with longitudinal rails (8, 8') which oppose one another with spacing and extend in parallel with one another, with an intermediate member (1, 20) arranged between the longitudinal rails with at least one wall (21, 21') with a sliding plane (11) for supporting a conveyor belt, wherein end plates for deflecting and/or drive rollers can be fastened on the longitudinal rails to guide and/or to drive the conveyor belt, wherein the intermediate member (1, 20) has a box-like construction and comprises two surfaces (10, 3) opposing one another with spacing with cavities (4, 4') which are continuous in the longitudinal direction and are separated from one another by webs, characterized in that magnets (22, 23) are inserted in the cavities below the wall (21, 21') to act on material conveyed by the conveyor belt.

2. Belt conveyor according to Claim 1, characterized in that the magnets (22) are designed as permanent magnets.

3. Belt conveyor according to Claim 1, characterized in that magnets (23) are designed as electromagnets.

4. Belt conveyor according to Claim 3, characterized in that at least a proportion of the electromagnets (23) is connected to a control system (24) for controlling the field strength.

5. Belt conveyor according to one of Claims 1 to 4, characterized in that the magnets (22, 23) are distributed over the entire area covered by the wall (21, 21').

6. Belt conveyor according to Claim 5, characterized in that the magnets (22, 23) are packed as tightly as possible.

7. Belt conveyor according to one of Claims 1 to 6, characterized in that the intermediate member (1, 20) is connected at least to a supply connection (25, 25') for conveying a fluid of the desired temperature through the cavities (4, 4') in the intermediate member (1, 20).

8. Belt conveyor according to Claim 7, characterized in that the fluid is a liquid.

9. Belt conveyor according to Claim 7, characterized in that the fluid is a gas.

10. Belt conveyor according to one of Claims 1 to 9, characterized in that at least the intermediate member (1, 20) consists of a non-magnetic material.

## Revendications

1. Dispositif de transporteur à courroie comportant un châssis formé de longerons (8, 8') espacés l'un en face de l'autre et parallèles, et un élément intermédiaire (1, 20) disposé entre les longerons et pourvu d'au moins une paroi (21, 21') avec un plan de glissement (11) pour l'application d'une courroie de transporteur, étant précisé que des flasques pour rouleaux de renvoi et/ou d'entraînement peuvent être fixés aux longerons en vue du guidage et/ou de l'entraînement de la courroie de transporteur, et que l'élément intermédiaire (1, 20) comporte une structure en forme de caisson et deux surfaces (10, 3) espacées l'une en face de l'autre et pourvues de cavités (4, 4') continues dans le sens longitudinal et séparées les unes des autres par des nervures, caractérisé en ce que des aimants (22, 23) sont placés dans les cavités, au-dessous de la paroi (21, 21'), pour agir sur des produits isolés transportés à l'aide de la courroie de transporteur.

2. Dispositif de transporteur à courroie selon la revendication 1, caractérisé en ce que les aimants (22) sont conçus comme des aimants permanents.

3. Dispositif de transporteur à courroie selon la revendication 1, caractérisé en ce que les aimants (23) sont conçus comme des électro-aimants.

4. Dispositif de transporteur à courroie selon la revendication 3, caractérisé en ce qu'une partie au moins des électro-aimants (23) sont reliés à un dispositif de réglage (24) en vue du réglage de l'intensité de champ.

5. Dispositif de transporteur à courroie selon l'une des revendications 1 à 4, caractérisé en ce que les aimants (22, 23) sont répartis sur toute la surface couverte par la paroi (21, 21').

6. Dispositif de transporteur à courroie selon la revendication 5, caractérisé en ce que les aimants (22, 23) sont disposés de façon aussi dense que possible.

7. Dispositif de transporteur à courroie selon l'une des revendications 1 à 6, caractérisé en ce que l'élément intermédiaire (1, 20) est relié au moins à un raccordement d'arrivée (25, 25') en vue du passage d'un fluide à la température souhaitée dans les cavités (4, 4') de l'élément intermédiaire (1, 20).

8. Dispositif de transporteur à courroie selon la revendication 7, caractérisé en ce que le fluide est un liquide.

9. Dispositif de transporteur à courroie selon la revendication 7, caractérisé en ce que le fluide est un gaz.

10. Dispositif de transporteur à courroie selon l'une des revendications 1 à 9, caractérisé en ce que l'élément intermédiaire (1, 20), au moins, se compose d'un matériau non magnétique.
